# EUROPEAN PATENT SPECIFICATION

(11) **EP 4 609 561 B1**
(45) Date of publication and mention of the grant of the patent: **12.08.2026**
(21) Application number: 22800384.4
(22) Date of filing: 24.10.2022
(51) Int. Cl.: H04L 9/40, H04W 76/10, H04W 12/069, H04L 9/32

(54) **SUPPORTING SECURE COMMUNICATIONS BETWEEN NETWORK FUNCTIONS**
UNTERSTÜTZUNG SICHERER KOMMUNIKATIONEN ZWISCHEN NETZWERKFUNKTIONEN
PRISE EN CHARGE DE COMMUNICATIONS SÉCURISÉES ENTRE DES FONCTIONS DE RÉSEAU

(43) Date of publication of application: 03.09.2025
(73) Proprietor: Telefonaktiebolaget LM Ericsson (publ), 164 83 Stockholm (SE)
(72) Inventor: GHIGLINO, Barbara, 16156 Genova (IT); IGNOTI, Valentino, 16014 Campomorone (IT)
(74) Representative: Ericsson
(86) International application number: PCT/SE2022/050971
(87) International publication number: WO 2024/091150

(56) References cited:
- EP-A1- 4 135 380
- WO-A1-2021/227964
- US-A1- 2021 377 054
- US-A1- 2022 264 301
- "3rd Generation Partnership Project; Technical Specification Group Services and System Aspects; Study on Automated Certificate Management in SBA; (Release 18)", no. V0.4.0, 20 October 2022 (2022-10-20), pages 1 - 43, XP052211619, Retrieved from the Internet <URL:https://ftp.3gpp.org/Specs/archive/33_series/33.876/33876-040.zip S3-223033_Draft TR.33.876_040_cl.docx> [retrieved on 20221020]

## Description

### TECHNICAL FIELD

The invention relates to a method and a device for supporting secure communication between network functions deployed in a network having two or more network slices, a corresponding computer program, and a corresponding computer program product.

### BACKGROUND

Network slicing is a network architecture enabling virtualized and independent logical networks on the same shared infrastructure. From a network operator point of view, a network slice is an independent end-to-end logical network that runs on a shared physical infrastructure. An implementation of a network slice is represented by a network slice instance (NSI), i.e., a set of network function (NF) instances and the required resources (e.g., compute, storage, and networking resources). A network slice could span across multiple parts of a network (e.g., terminal, access network, core network, transport network, cloud) and could be deployed across multiple network operators. The property of a network slice to operate without any influence of other network slices utilizing the same infrastructure is referred to as isolation. Isolation ensures that congestion, attacks, and lifecycle-related events (e.g., scaling in/out) on one network slice do not negatively impact other existing network slices.

Security risks in a network with slicing comprise: (i) privacy risk of (mobile) terminal access to the network; and (ii) risk of communications between network functions belonging to different network slices. Further information on security challenges of network slicing can be found in "Security Consideration for 5G Network Operation v1.0", NGMN Alliance, https://www.ngmn.org/wp-content/uploads/210804-NGMN-Security-Considerations-for-5G-Network-Operation-V1.0.pdf, 2021.

US 2021/377054 A1 discloses a device determining that a network function of a network has been instantiated to facilitate communication via the network. The device may request a certificate authority to provide a certificate for the network function. The device may receive, from the certificate authority, the certificate. The device may generate a certificate profile to enable other network functions of the network to authenticate communications with the network function, wherein the certificate profile identifies: the certificate and a certification protocol. The device may provide, to the network function, the certificate profile to cause the network function to use the certificate to communicate with the other network functions.

### SUMMARY

It is an object of the invention to provide an improved alternative to the above techniques and prior art. More specifically, it is an object of the invention to provide improved secure communications between network functions (NFs) deployed in a network having two or more network slices. This and other objects of the invention are achieved by means of different aspects of the invention, as defined by the independent claims. Embodiments of the invention are characterized by the dependent claims.

According to a first aspect of the invention, a method for supporting secure communications between NFs deployed in a network having two or more network slices is provided. The method is performed by a computing device. The method comprises, for each one of the NFs, and for each interface of the NF, if the interface does not have a valid digital certificate, obtaining a digital certificate signed by a certification authority (CA) and a trusted CA certificate of the CA. The digital certificate is obtained based on one or more attributes and on one or more isolation requirements associated with the NF. The method further comprises transmitting, to the NF, the obtained digital certificate. The method further comprises identifying one or more further NFs connected to the NF. The method further comprises, if one or more of the one or more further NFs do not have the trusted CA certificate, transmitting the trusted CA certificate to the one or more further NFs not having the trusted CA certificate.

According to a second aspect of the invention, a computing device for supporting secure communications between NFs deployed in a network having two or more network slices is provided. The computing device comprises a processor and a memory. The memory has stored thereon instructions executable by the processor, wherein the instructions, when executed by the processor, cause the computing device to, for each one of the NFs, and for each interface of the NF, if the interface does not have a valid digital certificate obtain a digital certificate signed by a CA, and a trusted CA certificate of the CA. The digital certificate is obtained based on one or more attributes and on one or more isolation requirements associated with the NF. The computing device is further operative to transmit, to the NF, the obtained digital certificate. The computing device is further operative to identify one or more further NFs connected to the NF. The computing device is further operative to, if one or more of the one or more further NFs do not have the trusted CA certificate, transmit the trusted CA certificate to the one or more further NFs not having the trusted CA certificate.

According to a third aspect of the invention, a computer program is provided. The computer program comprises instruction which, when run in a processing unit on a computing device, cause the computing device to, for each one of the NFs, and for each interface of the NF, if the interface does not have a valid digital certificate, obtain a digital certificate signed by a CA, and a trusted CA certificate of the CA. The digital certificate is obtained based on one or more attributes and on one or more isolation requirements associated with the NF. The instructions further cause the computing device to transmit to the NF the obtained digital certificate. The instructions further cause the computing device to identify one or more further NFs connected to the NF. The instructions further cause the computing device to, if one or more of the one or more further NFs do not have the trusted CA certificate, transmit the trusted CA certificate to the one or more further NFs not having the trusted CA certificate.

According to a fourth aspect of the present invention there is provided a computer program product comprising a computer readable storage medium on which a computer program according to an embodiment of the third aspect of the invention is stored.

Certain embodiments may provide one or more of the following technical advantages. Trusted domains are automatically identified without any manual activity, reducing the risk of human errors. Not required communications between NFs may be inhibited by creating a CA for each interface of a NF and distributing the trusted CA certificate only to counterparts allowed of communicate to the interface. Deployment of the trusted domains in a network may be dynamically updated by a centralized orchestrator that may react in runtime to a different network configuration or to the deployment of new network slices, as reflected in changes of topologies of the network slices.

### BRIEF DESCRIPTION OF THE DRAWINGS

For better understanding of the present disclosure, and to show more readily how the invention may be carried into effect, reference will now be made, by way of example, to the following drawings, in which:
Figure 1 shows an example scenario according to embodiments of the invention;
Figure 2 shows a flow chart illustrating a method for supporting secure communications between network functions deployed in a network having two or more network slices, according to embodiments of the invention;
Figure 3a shows an example flow chart illustrating supporting secure communications between network functions deployed in a network having two or more network slices, according to embodiments of the invention;
Figure 3b shows a further example flow chart illustrating supporting secure communications between network functions deployed in a network having two or more network slices, according to further embodiments of the invention;
Figure 4 shows an example scenario comprising a dedicated network function according to embodiments of the invention;
Figure 5 shows an example scenario comprising a shared network function according to embodiments of the invention;
Figure 6 shows an example scenario comprising a shared network function with dedicated interfaces according to embodiments of the invention; and
Figure 7 shows a block diagram depicting a computing device according to embodiments of the invention.

### DETAILED DESCRIPTION

Embodiments will be illustrated herein with reference to the accompanying drawings. These embodiments are provided by way of example so that this disclosure will be thorough and complete, and will fully convey the scope of the inventive concept to those skilled in the art.

Communications between network functions (NFs) deployed in different network slices (or network slice instances) may incur security risks, such as unauthorized use of shared resources and unauthorized connections between NFs deployed in different network slices. The failure of one network slice or its resources may adversely affect the operation of other slices because of the sharing of physical infrastructure between network slices, or the consume of shared resources by a single network slice may cause lack of resources and support for other network slices.

Therefore, it is important to define trusted domains (or domains of trust) in a network with two or more network slices. A trusted domain is a group of entities, such as NFs, that need to authenticate each other to be able to communicate in a secure way. Trusted domains are usually manually identified and a public key infrastructure (PKI) is configured to generate digital certificates for authentication of the entities belonging to a same trusted domain.

The solution disclosed herein makes it possible to dynamically and automatically deploy and maintain trusted domains in a network having two or more network slices. This is accomplished by creating a certificate authority (CA) and a digital certificate signed by the CA for each interface of an NF of a trusted domain, and distributing a trusted CA certificate to the further NFs belonging to the trusted domain. By exchanging their digital certificates, the NFs of the trusted domain may authenticate each other and establish secure communications.

The solution disclosed herein provides one or more of the following technical advantages:
- trusted domains are automatically identified without any manual activity, reducing the risk of human errors;
- not required inter-communications between NFs may be inhibited by creating a CA for each interface of a NF and distributing the trusted CA certificate only to counterparts allowed to communicate with the interface;
- deployment of the trusted domains in a network may be dynamically updated by a centralized orchestrator that may react in runtime to a different network configuration or to the deployment of new network slices, as reflected in changes of topologies of the network slices.

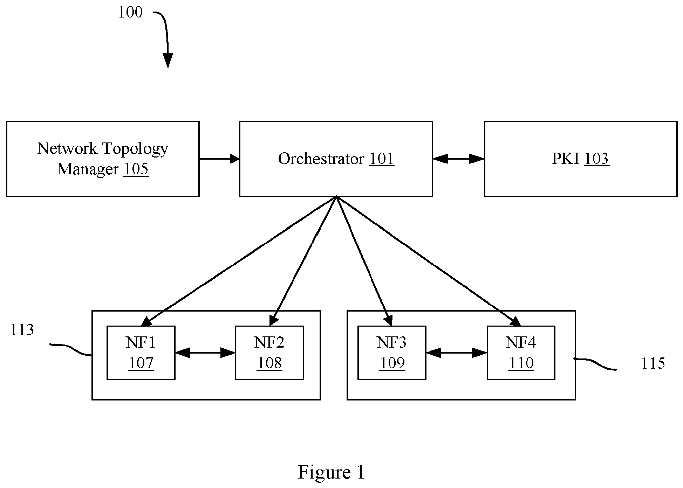

Figure 1 schematically shows an example of a system 100 in which a solution according to embodiments of the invention may be implemented. The system 100 comprises an orchestrator 101, a PKI 103, a slice network topology manager 105, and a network comprising four NFs, NF1-NF4, 107-110.

In the example system 100, the orchestrator 101 is an entity responsible for instantiating network slices and managing the network slices' life cycle. The orchestrator 101 may be an entity performing a method according to embodiments of the invention. An example of such an orchestrator is a service management and orchestration (SMO) node which provides automation and orchestration of an Open Random Access Network (RAN) domain. The orchestrator 101 may obtain information of a topology of the network comprising the NFs from a slice network topology manager 105. The slice network topology manager 105 may be an entity able to discover NFs, links between the NFs, and other information about an NF, such as attributes and isolation requirements. The slice network topology manager 105 may be an external standalone component implemented on a router, gateway, Internet of things (IoT) gateway, or any device with computing, storage, and network connectivity. Alternatively, it can be an NF within the orchestrator 101.

The NFs 107-110 may be virtual network functions (VNFs) or physical network functions (PNFs). An NF may be shared or dedicated. An NF is shared if resources of the NF are used by two or more network slices, and an NF is dedicated if resources of the NF are used by only one network slice. Isolation requirements at a resource level define if an NF is dedicated or shared. The NFs 107-110 may span over multiple domains (e.g., terminal, access network, core network, transport network, cloud). NFs of the core network may communicate with each other via Service Base Interfaces (SBI). NFs deployed between core network and RAN may communicate via non-Service Base Interfaces. An NF may communicate with other NFs or with the orchestrator 101, exchanging, for example, signaling in relation to operations and maintenance (O&M) tasks.

NFs belonging to the same trusted domain need to authenticate each other to be able to communicate in a secure way. With reference to Figure 1, NF1 107 and NF2 108 belong to a first trusted domain 113, and NF3 109 and NF4 110 belong to a second trusted domain 115. Examples of security protocols used on a communication channel between NFs of a trusted domain are Datagram Transport Layer Security (DTLS) for the communication channel between 5G core control plane (5GC CP) and RAN Centralized Unit Control Plane (CU-CP), and IPsec for the communications between RAN and 5GC (over interfaces N2/N3) and between 5GC and external network like enterprise network (over interface N6).

The PKI 103 is an entity that creates, signs, and manages, CAs entities and issues certificates for end entities, such as NFs. The PKI may be implemented as a fully functional external standalone PKI entity or as an NF within the orchestrator 101 itself. According to embodiments of the invention, the orchestrator 101 requests the PKI to create a new CA for each interface of each NF of a trusted domain. The created CA signs the digital certificate to be assigned to the interface. The CA acts as a trusted third party, trusted both by a subject (owner) of the digital certificate, e.g., an NF of a trusted domain, and by a party relying upon the digital certificate, e.g., one or more further NFs of the trusted domain.

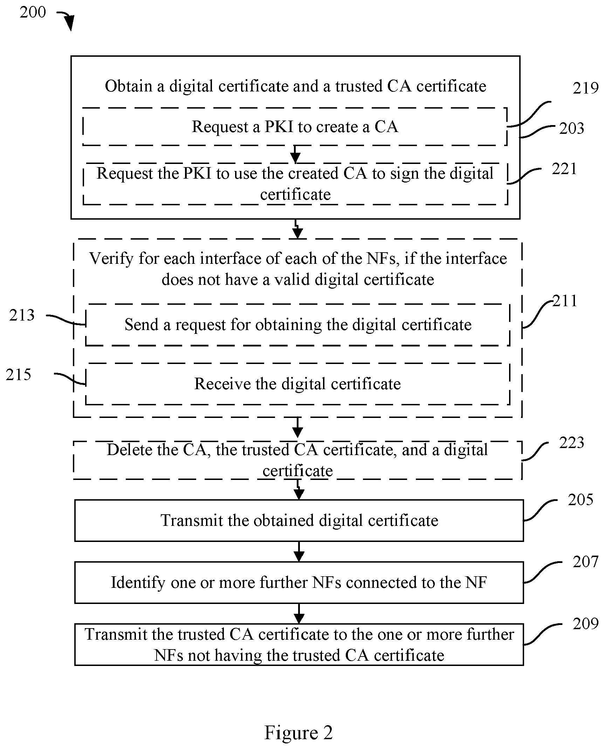

In the following, embodiments of a method 200 for supporting secure communications between NFs deployed in a network having two or more network slices are described with reference to Figure 2. The method is performed by a computing device 700, such as an orchestrator 101.

The method 200 comprises performing the following steps for each interface of each NF of the network if the interface does not have a valid digital certificate. In other words, the following steps are preferably performed as a loop over all the NFs of the network and over all the interfaces of each NF.

The method comprises obtaining 203 a digital certificate signed by a CA and a trusted CA certificate of the CA. The obtained digital certificate is then transmitted 205 to the NF. Examples of digital certificates comprise an X.509 certificate, an OpenPrettyGoodPrivacy certificate, Raw Public Key certificate, and a 1609Dot2 certificate.

The digital certificate signed by the CA and the trusted CA certificate of the CA are obtained based on one or more attributes and one or more isolation requirements associated with the NF. Optionally, the attributes associated with an NF indicate if the NF is a client, a server, or both, and/or requirements pertaining to the secure communications between the NFs, such as a level of security (low, high, medium). For example, an attribute indicating a certain level of security may be mapped to a specific key algorithm and key size (e.g., a low level of security may be mapped to Rivest-Shamir-Adleman (RSA) algorithm and 2048 bit key size, and a high level of security may be mapped to Elliptic Curve Digital Signature Algorithm (ECDSA) and 384 bit key size).

According to an embodiment of the invention, the digital certificate signed by the CA and the trusted CA certificate may be obtained by requesting 219 a PKI to create the CA, and by requesting 221 the PKI to use the created CA to sign the digital certificate. According to an embodiment of the invention, a unique CA and a unique digital certificate signed by the unique CA are created for each interface of the NF. This is different from state-of-the-art solutions where a single CA signs multiple certificates, and thus the single trusted CA certificate is used to trust multiple interfaces. A more granular definition of the CA (i.e., one per interface) allows a reduction of the size of the trust domains and a maximum possible level of isolation.

The method further comprises identifying 207 one or more further NFs connected to the NF, and if one or more of the one or more further NFs do not have the trusted CA certificate, transmitting 209 the trusted CA certificate to the one or more further NFs not having the trusted CA certificate. When the NF transmits its digital certificate to the one or more further NFs to be authenticated, the one or more further NFs use the trusted CA certificate to validate the received digital certificate.

The method 200 may further comprise deleting or creating new CAs if the network deployment changes, e.g., a connection between an NF and one or more further NFs, an interface of the NF, or the NF, is removed or added.

According to an embodiment of the invention, if any one of a connection between an NF and one or more further NFs, an interface of the NF, or the NF, is removed, the method 200 further comprises deleting 223 the CA, the trusted CA certificate, and the digital certificate assigned to the interface of the NF. The deletion of the CA does not affect other NFs since the CA was used to issue only the digital certificate of the NF, interface, or connection that is no more part of the network.

If any one of a connection between an NF and one or more further NFs, an interface of the NF, or the NF, is added, the method 200 further comprises generating 219 a new CA, and obtaining 203 a new trusted CA certificate and a new digital certificate assigned to the interface of the NF.

The method 200 comprises determining 211 if an interface of an NF does not have a valid digital certificate. For instance, the interface may not have a valid digital certificate because the NF has just been deployed, and thus it does not have a digital certificate yet, or the interface may have a digital certificate, but the digital certificate is not valid because it has expired or has been revoked. In case of digital certificate expiration, the computing device 700 may maintain a database with enrolled digital certificates and corresponding expiration dates. To verify if a digital certificate has expired, the computing device 700 may periodically check the information in the database to evaluate the remaining validity. In case of digital certificate revocation, the computing device 700 may implement an online certificate status protocol (OCSP) client to check the digital certificate validity towards the PKI or it may periodically download certificate revocation list (CRL) files from a CRL issuer, which is typically the CA which also has issued the corresponding digital certificates, or alternatively some other trusted authority.

According to an embodiment of the invention, the verification 211, for each interface of each of the NFs, if the interface does not have a valid digital certificate comprises sending 213, to the NF, a request for obtaining the digital certificate, and receiving 215, from the NF, the digital certificate. The verification 211 further comprises, if the digital certificate does not match the one or more attributes associated with the NF, obtaining a new 203 digital certificate signed by a new CA and associated with the interface based on the one or more attributes, and a new trusted CA certificate of the new CA.

According to an embodiment of the invention, the attributes associated with an NF indicate if the NF is a client, a server, or both, and/or requirements pertaining to the secure communications between the NFs, such as level of security (low, high, medium), or certificate extension values, such as extendendKeyUsage for IPSec that defines the purpose of a public key contained in a digital certificate.

The one or more isolation requirements associated with an NF indicate the one or more network slices which the NF is deployed in. The one or more isolation requirements associated with the NF may for example indicate whether resources of the NF are shared resource or dedicated resources. An NF with shared resources is deployed in two or more network slices, whereas an NF with dedicated resources is deployed only in one network slice.

According to an embodiment of the invention, the one or more attributes and the one or more isolation requirements associated with the NF, links between the NF and the one or more further NFs, are comprised in a representation of a topology of the network slice. The representation of a topology may be graph-oriented, wherein the NFs deployed in one or more network slices represent the vertices of the graph and the connection between the NFs represents the links of the graph. The representation of a topology may be in a JavaScript Object Notation (JSON) or eXtensible Markup Language (XML) format.

The one or more attributes and the one or more isolation requirements and/or the representation of a topology may be obtained from a slice network topology manager 105.

It will be appreciated that the method 200 may comprise additional, alternative, or modified, steps in accordance with what is described throughout this disclosure. An embodiment of the method 200 may be implemented as a computer program 704 comprising instructions which when the computer program 704 is executed by the computing device 700 cause the computing device 700 to carry out the method 200 and become operative in accordance with embodiments of the invention described herein. The computer program 704 may be stored in a computer-readable data medium, such as a memory 702. Alternatively, the computer program 704 may be carried by a data carrier signal, e.g., downloaded to the memory via a network interface circuitry 703.

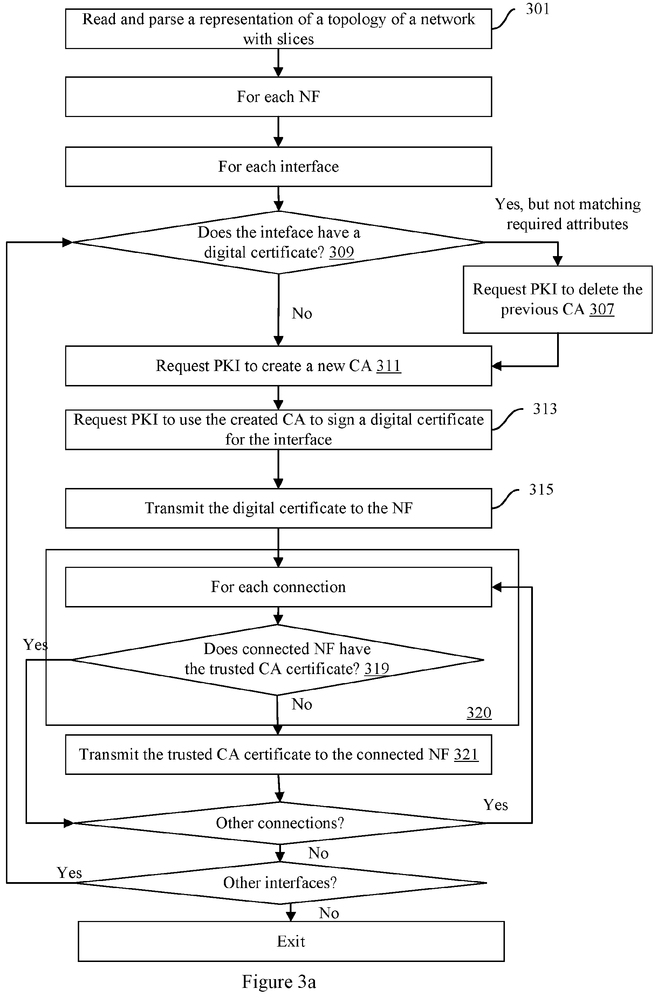

Figure 3a shows an example flow chart illustrating steps for performing a method by a computing device 700 according to embodiments of the invention. The computing device 700 takes as input a representation of a topology of a network, wherein the representation of the topology comprises two or more NFs deployed in the two or more network slices, links between the NFs, and attributes and isolation requirements associated with the NFs. The computing device reads and parses 301 the representation of the topology. For each interface of each NF, the computing device 700 verifies 309 if the interface has a valid digital certificate. If the interface has a valid digital certificate but the digital certificate does not match the attributes associated with the NF, the computing device 700 may optionally request 307 a PKI to delete the CA that signed the valid digital certificate and a corresponding trusted CA certificate signed by the CA. If the CA of the interface has been deleted or if the interface does not have a valid digital certificate, the computing device 700 requests 311 the PKI to create a new CA, requests 313 the PKI to use the created CA to sign the digital certificate for the interface, and transmits 315 the signed digital certificate to the NF associated with the interface.

Then the computing device 700 identifies 320 one or more trusted domains. The one or more trusted domains are identified by verifying if the NF is connected to one or more further NFs. For each further NF connected to the NF, the computing device verifies 319 if the one or more further connected NFs have the trusted CA certificate. If a further NF does not have the trusted CA certificate, the trusted CA certificate is transmitted 321 to the further NF. If the further NF has already the trusted CA certificate, the next connected NF is verified 325 until all connected NFs are verified.

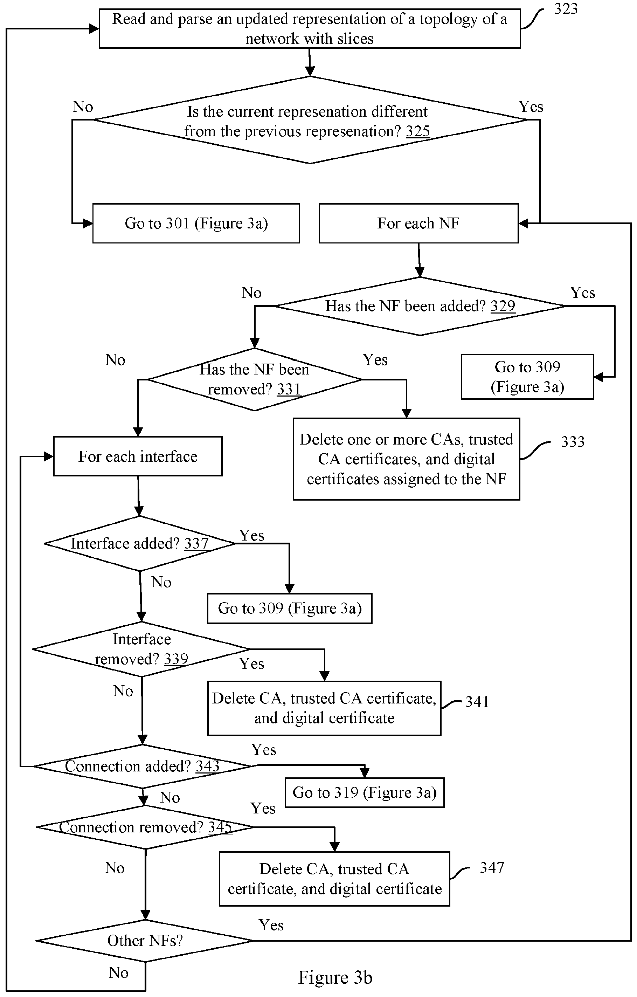

The computing device 700 may receive 323 updated representations of the topology. Figure 3b shows a flow chart illustrating steps for performing a method by a computing device 700 according to embodiments of the invention in case of updates to the representation of the topology.

If an updated representation of the topology differs 325 from the previous representation, one of the following cases may occur:
- the NF has been removed (331, 333): in this case, one or more CAs, one or more trusted CA certificates, and one or more digital certificates assigned to one or more interfaces of the NF, are removed 333;
- a new NF has been added (329, 309-321): in this case, for each interface of the NF, a new CA, a new trusted CA certificate, and a new digital certificate, are created and transmitted to the NF;
- an interface has been added to an NF (337, 309-321): in this case a new CA, a new trusted CA certificate, and a new digital certificate, are created and transmitted to the NF;
- an interface of an NF has been removed (339, 341): in this case, the CA, the trusted CA certificate, and the digital certificate assigned to the interface, are removed 341;
- a connection between an NF and a further NF via an interface has been added (343, 319-321): in this case, a trusted CA certificate of a CA that signed a digital certificate of the interface of the NF is transmitted to the further NF;
- a connection between an NF and a further NF has been removed (345, 347): in this case, the CA, the trusted CA certificate, and the digital certificate assigned to the interface connecting the NF and the further NF, are removed 345.

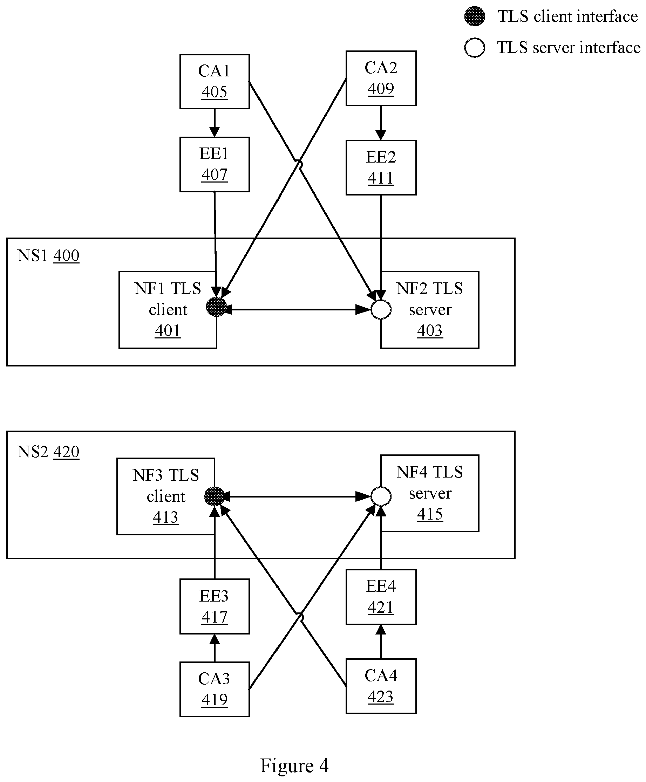

Figure 4 shows an example system in which a solution according to embodiments of the invention may be implemented. The system comprises two NFs (NF1 401 and NF2 403) deployed in a first network slice NS1 400, and two NFs (NF3 413 and NF4 415) deployed in a second network slice NS2 420. The isolation requirement of NF1 401 indicates that NF1 401 is a TLS client, and the isolation requirement of NF2 403 indicates that NF2 403 is a TLS server. For example, NF1 may be a Session Management Function (SMF) and NF2 may be an Access and Mobility Management Function (AMF) of a 5GC architecture. Furthermore, NF3 413's isolation requirement indicates that NF3 401 is a TLS client, and NF4 413's isolation requirement indicates that NF4 415 is a TLS server. For example, NF3 may be an Authentication Server Function (AUSF) and NF4 may be a Unified Data Management (UDM) of the 5GC.

NF1 401 and NF2 403 are deployed in a same first trusted domain, and NF3 413 and NF4 415 are deployed in a same second trusted domain. An orchestrator, performing a method 200 as described above, would request a PKI to create four new CAs: a first CA (CA1) 405 for NF1, a second CA (CA2) 409 for NF2, a third CA (CA3) 419 for NF3, and a fourth CA (CA4) 423 for NF4. Subsequently, four digital certificates, EE1 407, EE2 411, EE3 417, and EE4 421 are created. For example, EE1 may be a X.509 client certificate 407, signed by the first CA 405, and EE2 may be a X.509 server certificate 411 signed by the second CA 409. NF1 receives the digital certificate EE1 and a trusted CA certificate signed by CA2. NF2 receives the digital certificate EE2 and a trusted CA certificate signed by CA1. NF1 and NF2 may then establish secure communications as follows: NF1 may authenticate NF2 by requesting the X.509 server certificate (EE2) to NF2 and using the trusted CA certificate of CA2 to verify EE2, and NF2 may authenticate NF1 by requesting the X.509 client certificate (EE1) to NF1 and using the trusted CA certificate of CA1 to verify the EE1.

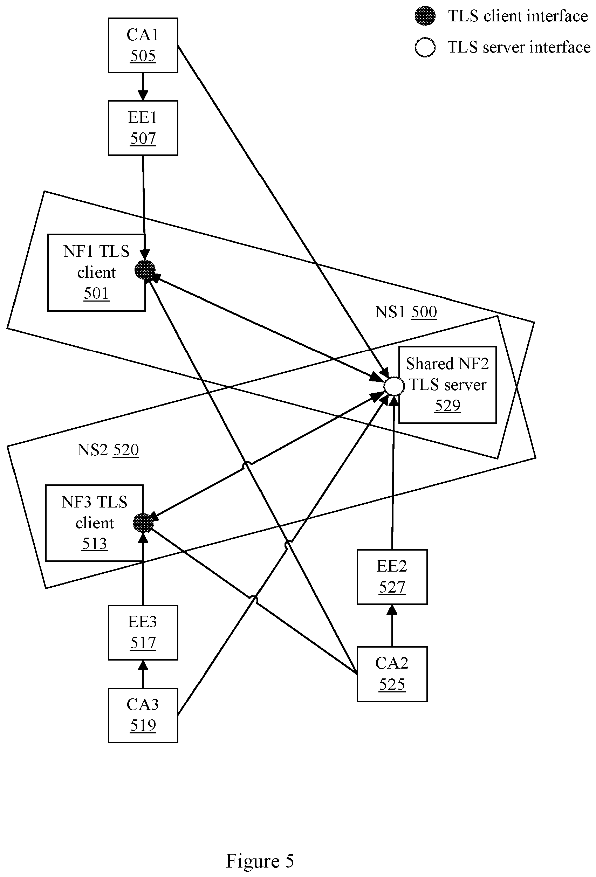

Figure 5 shows an example system in which a solution according to embodiments of the invention may be implemented. The system comprises three NFs (NF1 501, NF2 529, and NF3 513). NF1 and NF3 are dedicated network functions, i.e., NF1 (e.g., a TLS client) is deployed in a first slice NS1 500, and NF3 (e.g., a TLS client) is deployed in a second slice NS2 520. NF3 (e.g., a TLS server) is shared between the first and the second slice, i.e., a same interface of NF3 is used for communicating with both NF1 and NF3. The system has two trusted domains: the connection between NF1 and NF2 is the first trusted domain, and the connection between NF3 and NF2 is the second trusted domain. An orchestrator performing a method 200 as described above, would request a PKI to create three new CAs: a first CA (CA1 505) for NF1, a second CA (CA2 525) for NF2, and a third CA (CA3 519) for NF3. Subsequently, three digital certificates are created: EE1 507 (e.g., a X.509 client certificate), EE2 527 (e.g., a X.509 server certificate), and EE3 517 (e.g., a X.509 client certificate). NF1 will receive the digital certificate EE1 and a trusted CA certificate signed by CA2. NF2 will receive the digital certificate EE2, a trusted CA certificate signed by CA1, and a trusted CA certificate signed by CA3. NF3 will receive the digital certificate EE3 and a trusted CA certificate signed by CA2. Subsequently, NF1, NF2, and NF3, may establish secure communications as follows:
- NF1 may authenticate the shared NF2 by requesting the X.509 server certificate (EE2) to NF2 and using the trusted CA certificate of CA2 to verify the digital certificate EE2,
- NF3 may authenticate the shared NF2 by requesting the X.509 server certificate (EE2) to NF2 and using the trusted CA certificate of CA2 to verify the digital certificate EE2, and
- NF2 may authenticate NF1 by requesting the X.509 client certificate (EE1) to NF1 and using the trusted CA certificate of CA1 to verify the digital certificate EE1, and authenticate NF3 by requesting the X.509 client certificate (EE3) to NF3 and using the trusted CA certificate of CA3 to verify the digital certificate EE3.

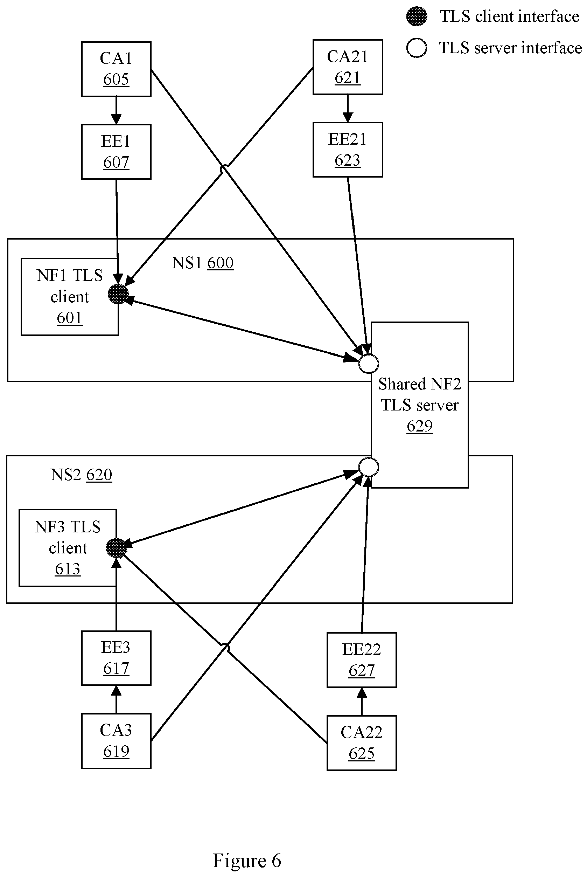

Figure 6 shows an example system in which a solution according to embodiments of the invention may be implemented. The system comprises three NFs (NF1 601, NF2 629, and NF3 613). NF1 and NF3 are dedicated network functions, i.e., NF1 (e.g., a TLS client) is deployed in a first network slice NS1 600, and NF3 (e.g., a TLS client) is deployed in a second network slice NS2 620. NF3 (e.g., a TLS server) is shared between the first and the second network slice, but differently from Figure 5, NF3 has a first interface used by the first network slice and a second interface used by the second network slice. In this case, an orchestrator performing a method 200 as described above, would request a PKI to create four new CAs: CA1 605 for NF1, CA21 621 and CA22 625 for NF2, and CA3 619 for NF3. Subsequently, four digital certificates are created: EE1 607 (e.g., a X.509 client certificate), EE21 623 (e.g., a X.509 server certificate), EE22 627 (e.g., a X.509 server certificate), and EE3 617 (e.g., a X.509 client certificate). NF1 will receive the digital certificate EE1 and a trusted CA certificate signed by CA21. NF2 will receive the digital certificate EE21, the digital certificate EE22, a trusted CA certificate signed by CA1, and a trusted CA certificate signed by CA3. NF3 will receive the digital certificate EE3 and a trusted CA certificate signed by CA22. NF1, NF2, and NF3, may then establish secure communications as follows:
- NF1 may authenticate the shared NF2 by requesting the X.509 server certificate (EE21) to NF2 and using the trusted CA certificate of CA21 to verify the digital certificate EE21,
- NF3 may authenticate the shared NF2 by requesting the X.509 server certificate (EE22) to NF2 and using the trusted CA certificate of CA22 to verify the digital certificate EE22,
- NF2 may authenticate NF1 by requesting the X.509 client certificate (EE1) to NF1 and using the trusted CA certificate of CA1 to verify the digital certificate EE1, and authenticate NF3 by requesting the X.509 client certificate (EE3) to NF3 and using the trusted CA certificate of CA3 to verify the digital certificate EE3.

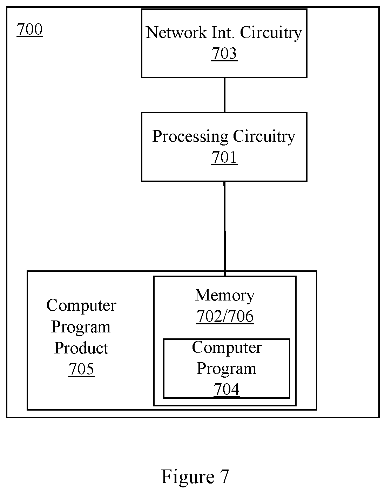

Figure 7 is a block diagram illustrating an embodiment of the computing device 700, comprising a processor circuitry 701, a computer program product 705 in the form of a computer readable storage medium 706, such as the memory 702, and the network interface circuitry 703.

The processing circuitry 701 may comprise one or more processors, such as Central Processing Units (CPUs), microprocessors, application processors, application-specific processors, Graphics Processing Units (GPUs), and Digital Signal Processors (DSPs) including image processors, or a combination thereof, and the memory 702 comprising a computer program 704 comprising instructions. When executed by the processor(s), the instructions cause the computing device 700 to become operative in accordance with embodiments of the invention described herein, in particular with reference to Figure 2. The memory 702 may, e.g., be a Random-Access Memory (RAM), a Read-Only Memory (ROM), a Flash memory, or the like. The computer program 704 may be downloaded to the memory 702 by means of a network interface circuitry 703, as a data carrier signal carrying the computer program 704. The network interface circuitry 703 may comprise one or more of a cellular modem (e.g., GSM, UMTS, LTE, 5G, or higher generation), a WLAN/Wi-Fi modem, a Bluetooth modem, an Ethernet interface, an optical interface, or the like, for exchanging data between the computing device 700 and other computing devices, communications devices, a radio-access network, and/or the Internet. The processing circuitry 701 may alternatively or additionally comprise one or more Application-Specific Integrated Circuits (ASICs), Field-Programmable Gate Arrays (FPGAs), or the like, which are operative to cause the computing device 700 to become operative in accordance with embodiments of the invention described herein. The computing device 700 may a router, gateway, IoT gateway, and any device with computing, storage, and network connectivity.

## Claims

1. A method (200) for supporting secure communications between network functions, NFs, deployed in a network having two or more network slices, the method performed by a computing device and comprising:
for each one of the NFs, and for each interface of the NF, if the interface does not have a valid digital certificate:
- obtaining (203), based on one or more attributes and on one or more isolation requirements associated with the NF, a digital certificate signed by a certification authority, CA, and a trusted CA certificate of the CA;
- transmitting (205), to the NF, the obtained digital certificate;
- identifying (207) one or more further NFs connected to the NF; and
- if one or more of the one or more further NFs do not have the trusted CA certificate, transmitting (209) the trusted CA certificate to the one or more further NFs not having the trusted CA certificate.

2. The method (200) according to claim 1, further comprising
- verifying (211), for each interface of each of the NFs, if the interface does not have a valid digital certificate by
- sending (213), to the NF, a request for obtaining the digital certificate;
- receiving (215), from the NF, the digital certificate; and
- if the digital certificate does not match the one or more attributes associated with the NF, obtaining (203) a new digital certificate signed by a new CA and associated with the interface based on the one or more attributes, and a new trusted CA certificate of the new CA.

3. The method (200) according to any of claims 1 or 2, wherein the obtaining a digital certificate signed by a CA, and a trusted CA certificate of the CA, comprises:
- requesting (219) a public key infrastructure, PKI, (103) to create the CA; and
- requesting (221) the PKI (103) to use the created CA to sign the digital certificate.

4. The method (200) according to any of claims 1 to 3, further comprising:
if any one of: a connection between an NF and one or more further NFs, an interface of the NF, or the NF, is removed:
- deleting (223) the CA, the trusted CA certificate, and a digital certificate assigned to the interface of the NF; and
if any one of: a connection between an NF and one or more further NFs, an interface of the NF, or the NF, is added:
- generating (219) a new CA, and
- obtaining (203) a new trusted CA certificate and a new digital certificate assigned to the interface of the NF.

5. The method (200) according to any of claims 1 to 4, wherein the attributes associated with an NF indicate if the NF is a client, a server, or both, and/or requirements pertaining to the secure communications between the NFs.

6. A computing device (700) for supporting secure communications between network functions, NFs, deployed in a network having two or more network slices, the computing device comprising a processor and a memory, the memory having stored thereon instructions executable by the processor, wherein the instructions, when executed by the processor, cause the computing device to:
for each one of the NFs, and for each interface of the NF, if the interface does not have a valid digital certificate:
- obtain (203), based on one or more attributes and on one or more isolation requirements associated with the NF, a digital certificate signed by a certification authority, CA, and a trusted CA certificate of the CA;
- transmit (205), to the NF, the obtained digital certificate;
- identify (207) one or more further NFs connected to the NF; and
- if one or more of the one or more further NFs do not have the trusted CA certificate, transmit (209) the trusted CA certificate to the one or more further NFs not having the trusted CA certificate.

7. The computing device (700) according to claim 6, wherein the instructions, when executed by the processor, cause the computing device to:
- verify (211), for each interface of each of the NFs, if the interface does not have a valid digital certificate by
- sending (213), to the NF, a request for obtaining the digital certificate;
- receiving (215), from the NF, the digital certificate; and
- if the digital certificate does not match the one or more attributes associated with the NF, obtaining a new (203) digital certificate signed by a new CA and associated with the interface based on the one or more attributes, and a new trusted CA certificate of the new CA.

8. The computing device (700) according to any of claims 6 or 7, wherein the instructions, when executed by the processor, cause the computing device to obtain a digital certificate signed by a CA, and a trusted CA certificate of the CA, by:
- requesting (219) a public key infrastructure, PKI, to create the CA; and
- requesting (221) the PKI to use the created CA to sign the digital certificate.

9. The computing device (700) according to claim 8, wherein a unique CA and a unique digital certificate signed by the unique CA are created for each interface of the NF.

10. The computing device (700) according to any of claims 6 to 9, wherein the instructions, when executed by the processor, cause the computing device to:
if any one of: a connection between an NF and one or more further NFs, an interface of the NF, or the NF, is removed:
- delete (223) the CA, the trusted CA certificate, and a digital certificate assigned to the interface of the NF; and
if any one of: a connection between an NF and one or more further NFs, an interface of the NF, or the NF, is added:
- generate (219) a new CA, and
- obtain (203) a new trusted CA certificate and a new digital certificate assigned to the interface of the NF.

11. The computing device (700) according to any of claims 6 to 10, wherein the attributes associated with an NF indicate if the NF is a client, a server, or both, and/or requirements pertaining to the secure communications between the NFs.

12. The computing device (700) according to any of claims 6 to 11, wherein the one or more isolation requirements associated with an NF indicate the one or more network slices which the NF is deployed in.

13. The computing device (700) according to any of claims 6 to 12, wherein the one or more attributes and the one or more isolation requirements associated with the NF, connections between the NF and the one or more further NFs, are comprised in a representation of a topology of the network slice.

14. The computing device (700) according to claim 13, wherein the connections between the NF and the one or more further NFs are determined based on the links of the representation of the topology.

15. The computing device (700) according to any of claims 6 to 14, wherein the computing device is a Service management and orchestration, SMO, node.

## Patentansprüche

1. Verfahren (200) zur Unterstützung einer sicheren Kommunikation zwischen Netzwerkfunktionen, NFs, die in einem Netzwerk eingesetzt werden, das zwei oder mehr Netzwerkscheiben aufweist, wobei das Verfahren von einer Rechenvorrichtung ausgeführt wird und Folgendes umfasst:
für jede der NFs und für jede Schnittstelle der NF, falls die Schnittstelle kein gültiges digitales Zertifikat besitzt:
- Erhalten (203), basierend auf einem oder mehreren Attributen und auf einer oder mehreren der NF zugeordneten Isolationsanforderungen, eines von einer Zertifizierungsstelle, CA, signierten digitalen Zertifikats und eines vertrauenswürdigen CA-Zertifikats der CA;
- Übermitteln (205), an die NF, des erhaltenen digitalen Zertifikats;
- Identifizieren (207) eines oder mehrerer weiterer NFs, die mit der NF verbunden sind; und
- falls eine oder mehrere der weiteren NFs nicht über das vertrauenswürdige CA-Zertifikat verfügen, Übermitteln (209) des vertrauenswürdigen CA-Zertifikats an die eine oder die mehreren weiteren NFs, die nicht über das vertrauenswürdige CA-Zertifikat verfügen.

2. Verfahren (200) nach Anspruch 1, weiter umfassend
- Überprüfen (211), für jede Schnittstelle jeder NF, ob die Schnittstelle über kein gültiges digitales Zertifikat verfügt, durch
- Senden (213), an die NF, einer Anfrage zum Erhalten des digitalen Zertifikats;
- Empfangen (215), von der NF, des digitalen Zertifikats; und
- falls das digitale Zertifikat nicht mit dem einen oder mehreren Attributen übereinstimmt, die der NF zugeordnet sind, Erhalten (203) eines neuen digitalen Zertifikats, das von einer neuen CA signiert und der Schnittstelle basierend auf dem einen oder den mehreren Attribute zugeordnet ist, und eines neuen vertrauenswürdigen CA-Zertifikats der neuen CA.

3. Verfahren (200) nach einem der Ansprüche 1 oder 2, wobei das Erhalten eines von einer Zertifizierungsstelle signierten digitalen Zertifikats und eines vertrauenswürdigen Zertifikats der Zertifizierungsstelle umfasst:
- Anfordern (219) einer Public-Key-Infrastruktur, PKI, (103), um die CA zu erstellen; und
- Ersuchen (221) der Verwendung der erstellten CA zur Signierung des digitalen Zertifikats bei der PKI (103).

4. Verfahren (200) nach einem der Ansprüche 1 bis 3, weiter umfassend:
falls eine von: einer Verbindung zwischen einer NF und einer oder mehreren weiteren NFs, einer Schnittstelle der NF oder der NF entfernt wird:
- Löschen (223) der CA, des vertrauenswürdigen CA-Zertifikats und eines der Schnittstelle der NFzugeordneten digitalen Zertifikats; und
falls eine von einer Verbindung zwischen einer NF und einer oder mehreren weiteren NFs, einer Schnittstelle der NF oder der NF hinzugefügt wird:
- Erzeugen (219) einer neuen CA, und
- Erhalten (203) eines neuen vertrauenswürdigen CA-Zertifikats und eines neuen digitalen Zertifikats, das der Schnittstelle des NF zugeordnet ist.

5. Verfahren (200) nach einem der Ansprüche 1 bis 4, wobei die einer NF zugeordneten Attribute angeben, ob es sich bei der NF um einen Client, einen Server oder beides handelt, und/oder Anforderungen bezüglich der sicheren Kommunikation zwischen den NFs.

6. Rechenvorrichtung (700) zum Unterstützen sicherer Kommunikationen zwischen Netzwerkfunktionen, NFs, die in einem Netzwerk eingesetzt werden, das zwei oder mehr Netzwerkscheiben aufweist, wobei die Rechenvorrichtung einen Prozessor und einen Speicher umfasst, wobei in dem Speicher Anweisungen gespeichert sind, die von dem Prozessor ausführbar sind, wobei die Anweisungen, wenn sie von dem Prozessor ausgeführt werden, die Rechenvorrichtung veranlassen zum:
für jede der NFs und für jede Schnittstelle der NF, falls die Schnittstelle kein gültiges digitales Zertifikat besitzt:
- Erhalten (203), basierend auf einem oder mehreren Attributen und auf einer oder mehreren der NF zugeordneten Isolationsanforderungen, eines von einer Zertifizierungsstelle, CA, signierten digitalen Zertifikats und eines vertrauenswürdigen CA-Zertifikats der CA;
- Übermitteln (205), an die NF, des erhaltenen digitalen Zertifikats;
- Identifizieren (207) eines oder mehrerer weiterer NFs, die mit der NF verbunden sind; und
- falls eine oder mehrere der weiteren NFs nicht über das vertrauenswürdige CA-Zertifikat verfügen, Übermitteln (209) des vertrauenswürdigen CA-Zertifikats an die eine oder die mehreren weiteren NFs, die nicht über das vertrauenswürdige CA-Zertifikat verfügen.

7. Rechenvorrichtung (700) nach Anspruch 6, wobei die Anweisungen, wenn sie vom Prozessor ausgeführt werden, die Rechenvorrichtung veranlassen zum:
- Überprüfen (211), für jede Schnittstelle jeder NF, ob die Schnittstelle über kein gültiges digitales Zertifikat verfügt, durch
- Senden (213), an die NF, einer Anfrage zum Erhalten des digitalen Zertifikats;
- Empfangen (215), von der NF, des digitalen Zertifikats; und
- falls das digitale Zertifikat nicht mit dem einen oder mehreren Attributen übereinstimmt, die der NF zugeordnet sind, Erhalten (203) eines neuen digitalen Zertifikats, das von einer neuen CA signiert und der Schnittstelle basierend auf dem einen oder den mehreren Attribute zugeordnet ist, und eines neuen vertrauenswürdigen CA-Zertifikats der neuen CA.

8. Rechenvorrichtung (700) nach einem der Ansprüche 6 oder 7, wobei die Anweisungen, wenn sie vom Prozessor ausgeführt werden, die Rechenvorrichtung veranlassen zum Erhalten eines durch eine CA signierten digitalen Zertifikats und eines vertrauenswürdigen CA-Zertifikats der CA, durch:
- Anfordern (219) einer Public-Key-Infrastruktur, PKI, um die CA zu erstellen; und
- Ersuchen (221) der Verwendung der erstellten CA zur Signierung des digitalen Zertifikats bei der PKI.

9. Rechenvorrichtung (700) nach Anspruch 8, wobei für jede Schnittstelle der NF eine eindeutige CA und ein von der eindeutigen CA signiertes eindeutiges digitales Zertifikat erstellt werden.

10. Rechenvorrichtung (700) nach einem der Ansprüche 6 bis 9, wobei die Anweisungen, wenn sie vom Prozessor ausgeführt werden, die Rechenvorrichtung veranlassen zum: falls eine von: einer Verbindung zwischen einer NF und einer oder mehreren weiteren NFs, einer Schnittstelle der NF oder der NF entfernt wird:
- Löschen (223) der CA, des vertrauenswürdigen CA-Zertifikats und eines der Schnittstelle der NFzugeordneten digitalen Zertifikats; und
falls eine von einer Verbindung zwischen einer NF und einer oder mehreren weiteren NFs, einer Schnittstelle der NF oder der NF hinzugefügt wird:
- Erzeugen (219) einer neuen CA, und
- Erhalten (203) eines neuen vertrauenswürdigen CA-Zertifikats und eines neuen digitalen Zertifikats, das der Schnittstelle des NF zugeordnet ist.

11. Rechenvorrichtung (700) nach einem der Ansprüche 6 bis 10, wobei die einer NF zugeordneten Attribute angeben, ob es sich bei der NF um einen Client, einen Server oder beides handelt, und/oder Anforderungen bezüglich der sicheren Kommunikation zwischen den NFs.

12. Rechenvorrichtung (700) nach einem der Ansprüche 6 bis 11, wobei die eine oder mehrere Isolationsanforderungen, die einer NF zugeordnet sind, die eine oder mehrere Netzwerkscheiben angeben, in denen die NF eingesetzt wird.

13. Rechenvorrichtung (700) nach einem der Ansprüche 6 bis 12, wobei das eine oder mehrere Attribute und die eine oder mehrere Isolationsanforderungen, die der NF zugeordnet sind, Verbindungen zwischen der NF und der einen oder den mehreren weiteren NFs, in einer Darstellung einer Topologie der Netzwerkscheibe umfasst sind.

14. Rechenvorrichtung (700) nach Anspruch 13, wobei die Verbindungen zwischen der NF und der einen oder den mehreren weiteren NFs basierend auf den Verknüpfungen der Darstellung der Topologie bestimmt werden.

15. Rechenvorrichtung (700) nach einem der Ansprüche 6 bis 14, wobei die Rechenvorrichtung ein Dienstverwaltungs- und Orchestrierungsknoten, SMO-Knoten, ist.

## Revendications

1. Procédé (200) de prise en charge de communications sécurisées entre fonctions réseau, NF, déployées dans un réseau présentant au moins deux tranches de réseau, le procédé étant réalisé par un dispositif informatique et comprenant :
pour chacune des NF, et pour chaque interface de la NF, si l'interface ne présente pas de certificat numérique valide :
- l'obtention (203), sur la base d'un ou de plusieurs attributs et d'une ou plusieurs exigences d'isolation associées à la NF, d'un certificat numérique signé par une autorité de certification, CA, et d'un certificat CA de confiance de la CA ;
- la transmission (205), à la NF, du certificat numérique obtenu ;
- l'identification (207) d'une ou de plusieurs NF supplémentaires connectées à la NF ; et
- si une ou plusieurs parmi l'une ou les plusieurs NF supplémentaires ne présentent pas le certificat CA de confiance, la transmission (209) du certificat CA de confiance à l'une ou aux plusieurs NF supplémentaires ne présentant pas le certificat CA de confiance.

2. Procédé (200) selon la revendication 1, comprenant en outre
- la vérification (211), pour chaque interface de chacune des NF, si l'interface ne présente pas un certificat numérique valide par
- l'envoi (213), à la NF, d'une demande d'obtention du certificat numérique ;
- la réception (215), à partir de la NF, du certificat numérique ; et
- si le certificat numérique ne correspond pas à l'un ou aux plusieurs attributs associés à la NF, l'obtention (203) d'un nouveau certificat numérique signé par une nouvelle CA et associé à l'interface sur la base de l'un ou des plusieurs attributs, et un nouveau certificat CA de confiance de la nouvelle CA.

3. Procédé (200) selon l'une quelconque des revendications 1 ou 2, dans lequel l'obtention d'un certificat numérique signé par une CA, et d'un certificat CA de confiance de la CA, comprend :
- la demande (219) d'une infrastructure à clé publique, PKI, (103) pour créer la CA ; et
- la demande (221) à la PKI (103) d'utiliser la CA créée pour signer le certificat numérique.

4. Procédé (200) selon l'une quelconque des revendications 1 à 3, comprenant en outre :
si une quelconque parmi : une connexion entre une NF et une ou plusieurs NF supplémentaires, une interface de la NF, ou la NF, est retirée :
- la suppression (223) de la CA, du certificat de CA de confiance et d'un certificat numérique assigné à l'interface de la NF ; et
si une quelconque parmi une connexion entre une NF et une ou plusieurs NF supplémentaires, une interface de la NF, ou la NF, est ajoutée :
- la génération (219) d'une nouvelle CA, et
- l'obtention (203) d'un nouveau certificat CA de confiance et d'un nouveau certificat numérique assigné à l'interface de la NF.

5. Procédé (200) selon l'une quelconque des revendications 1 à 4, dans lequel les attributs associés à une NF indiquent si la NF est un client, un serveur ou les deux, et/ou des exigences relatives aux communications sécurisées entre les NF.

6. Dispositif informatique (700) pour prendre en charge des communications sécurisées entre des fonctions réseau, NF, déployées dans un réseau présentant deux ou plusieurs tranches de réseau, le dispositif informatique comprenant un processeur et une mémoire, sur laquelle mémoire sont stockées des instructions exécutables par le processeur, dans lequel les instructions, lorsqu'elles sont exécutées par le processeur, amènent le dispositif informatique à :
pour chacune des NF, et pour chaque interface de la NF, si l'interface ne présente pas de certificat numérique valide :
- obtenir (203), sur la base d'un ou de plusieurs attributs et d'une ou plusieurs exigences d'isolation associées à la NF, un certificat numérique signé par une autorité de certification, CA, et un certificat CA de confiance de la CA ;
- transmettre (205), à la NF, le certificat numérique obtenu ;
- identifier (207) une ou plusieurs NF supplémentaires connectées à la NF ; et
- si une ou plusieurs parmi l'une ou les plusieurs NF supplémentaires ne présentent pas le certificat CA de confiance, transmettre (209) le certificat CA de confiance à l'une ou aux plusieurs NF supplémentaires ne présentant pas le certificat CA de confiance.

7. Dispositif informatique (700) selon la revendication 6, dans lequel les instructions, lorsqu'elles sont exécutées par le processeur, amènent le dispositif informatique à :
- vérifier (211), pour chaque interface de chacune des NF, si l'interface ne présente pas un certificat numérique valide par
- l'envoi (213), à la NF, d'une demande d'obtention du certificat numérique ;
- la réception (215), à partir de la NF, du certificat numérique ; et
- si le certificat numérique ne correspond pas à l'un ou aux plusieurs attributs associés à la NF, obtenir un nouveau (203) certificat numérique signé par une nouvelle CA et associé à l'interface sur la base de l'un ou des plusieurs attributs, et un nouveau certificat CA de confiance de la nouvelle CA.

8. Dispositif informatique (700) selon l'une quelconque des revendications 6 ou 7, dans lequel les instructions, lorsqu'elles sont exécutées par le processeur, amènent le dispositif informatique à obtenir un certificat numérique signé par une CA, et un certificat CA de confiance de la CA, par :
- la demande (219) d'une infrastructure à clé publique, PKI, pour créer la CA ; et
- la demande (221) à la PKI d'utiliser la CA créée pour signer le certificat numérique.

9. Dispositif informatique (700) selon la revendication 8, dans lequel une CA unique et un certificat numérique unique signé par la CA unique sont créés pour chaque interface de la NF.

10. Dispositif informatique (700) selon l'une quelconque des revendications 6 à 9, dans lequel les instructions, lorsqu'elles sont exécutées par le processeur, amènent le dispositif informatique à : si l'une quelconque parmi : une connexion entre une NF et une ou plusieurs NF supplémentaires, une interface de la NF, ou la NF, est retirée :
- supprimer (223) la CA, le certificat de CA de confiance et un certificat numérique assigné à l'interface de la NF ; et
si une quelconque parmi : une connexion entre une NF et une ou plusieurs NF supplémentaires, une interface de la NF ou la NF est ajoutée :
- générer (219) une nouvelle CA, et
- obtenir (203) un nouveau certificat CA de confiance et un nouveau certificat numérique assigné à l'interface de la NF.

11. Dispositif informatique (700) selon l'une quelconque des revendications 6 à 10, dans lequel les attributs associés à une NF indiquent si la NF est un client, un serveur ou les deux, et/ou des exigences relatives aux communications sécurisées entre les NF.

12. Dispositif informatique (700) selon l'une quelconque des revendications 6 à 11, dans lequel l'une ou les plusieurs exigences d'isolation associées à une NF indiquent l'une ou les plusieurs tranches de réseau dans lesquelles la NF est déployée.

13. Dispositif informatique (700) selon l'une quelconque des revendications 6 à 12, dans lequel l'un ou les plusieurs attributs et l'une ou les plusieurs exigences d'isolation associés à la NF, des connexions entre la NF et l'une ou les plusieurs NF supplémentaires, sont compris dans une représentation d'une topologie de la tranche de réseau.

14. Dispositif informatique (700) selon la revendication 13, dans lequel les connexions entre la NF et l'une ou les plusieurs NF supplémentaires sont déterminées sur la base des liens de la représentation de la topologie.

15. Dispositif informatique (700) selon l'une quelconque des revendications 6 à 14, dans lequel le dispositif informatique est un nœud de gestion et d'orchestration de services, SMO.
